# EUROPEAN PATENT APPLICATION

(11) **EP 3 287 972 A1**
(43) Date of publication of application: **28.02.2018**
(21) Application number: 16306081.7
(22) Date of filing: 25.08.2016
(51) Int. Cl.: G06Q 30/02

(54) **METHOD FOR RENDERING A SET OF CONTENT ASSETS AT A DISPLAY DEVICE, CONTENT MANAGEMENT SERVER AND RELATED DISPLAY DEVICE**

(71) Applicant: ALCATEL LUCENT, 92100 Boulogne-Billancourt (FR)
(72) Inventor: DELEGUE, Gérard, 91620 Nozay (FR); GASTE, Yann, 91620 Nozay (FR)
(74) Representative: Nokia Bell Patent Attorneys

(57) **Abstract**

The present invention relates to a method, content management server and a related display device for rendering a set of content assets at a display device of a plurality of display devices. Each display device of said plurality of display devices being coupled to a content management server, where the content management server is configured to distribute content assets to each display device of said plurality of display devices. Each display device having an audience comprising at least one user for consuming said set of content assets rendered at said display device, whereat first an aggregated content is obtained by retrieving content assets from a plurality of content sources content and subsequently for a display device of said plurality of display devices, a set of content assets (for presenting on said display device) is selected from said aggregated content, based on a estimation of content assets already consumed by each user of said audience of said display device.

## Description

### FIELD OF THE INVENTION

The present invention relates to an information service technology and more particularly, a digital signage device capable of displaying (advertising) content assets provided from a content management server.

### TECHNICAL BACKGROUND OF THE INVENTION

Digital Signage is a form of a digital display device used as a communication tool with which any communications such as corporate information, advertisement, and training effect can be obtained and customer experience can be derived by providing not only broadcasting programs but also particular information at public areas such as hotels, hospitals, subway stations, and the like.

Digital signages may use technologies such as LCD, LED and Projection to display content such as digital images, video and e.g. streaming media. Such digital signages, further referred to as display devices can be found in public spaces, transportation systems, museums, stadiums, retail stores, hotels, restaurants, and corporate buildings etc, to provide wayfinding, exhibitions, marketing and outdoor advertising.

Moreover, within an enterprise, organizations may leverage digital signage solutions to compliment other enterprise-wide communication channels, directing employees and targeted audiences to detailed information, programming, or events via its web sites or Business-TV.

Networks of screens are installed in different venues such as coffee machine areas, corridors, meeting rooms or restaurants. A single screen may display multiple contents at the same time.

Media content may be managed at the central content server and subsequently conveyed via a local or global network to each broadcasting location being a display device. Camera enhanced displays may track the observers and their characteristics to identify the audience, and based heron a central content server broadcasts adaptive content in real-time, possibly at multiple locations. The content adaptation may be performed by taking into account parameters such gender, age group and spatial parameters (distance) associated with the observers.

However, such digital signage systems still experience several limitations, such as: a same user may see several times the same content, or the observation of screens deployed at multiple locations do not provide complementary content. Furthermore, contents e.g. may be adapted to the audience, but disadvantageously a same audience may generate a same content subsequently.

### SUMMARY OF THE INVENTION

An objective of the present invention is to provide with a method, a system and related devices for rendering content at a display of a plurality of displays, but wherein the aforementioned shortcoming or drawbacks of the known solutions are alleviated or overcome.

Accordingly, embodiments of the present invention relate to a method for rendering a set of content assets at a display device of a plurality of display devices, each display device of said plurality of display devices being coupled to a content management server, said content management server being configured to distribute content assets to each display device of a plurality of display devices, each display device having an audience comprising at least one user for consuming said set of content assets rendered at said display device, said method comprising the steps of:
- obtaining an aggregated content by retrieving content assets from a plurality of content sources; and
- selecting for a display device of said plurality of display devices, a set of content assets for rendering on said display device from said aggregated content, based on an estimation of content assets already consumed by each user of said audience of said display device.

Correspondingly, the present invention relates to a Content management server, being configured to distribute content assets to each display device of a plurality of display devices, each display device having an audience comprising at least one user for consuming said set of content assets rendered at said display device, said Content management server comprising:
- a content aggregation means, configured to obtain an aggregated content by retrieving content assets from a plurality of content sources coupled to said content management server; and
- a content selection means, configured to select for a display device of said plurality of display devices, a set of content assets for rendering on said display device from said aggregated content, based on an estimation of the content assets already consumed by each user of said audience of said display device.

In this way, by selecting for rendering at a display device of said plurality of display devices, a set of content assets, being a set of uncharted content assets, from an aggregated content, where this selecting is performed based on an estimation of the content assets of the aggregated content that are already being consumed by each user of said audience of said display device, the impact of the selected set of content assets is maximized, at rendering this set of content assets at a display device, by optimizing the capturing of the attention of people being in front of the digital display, while the set of content assets must be relevant, attractive, and as much as much as possible, uncharted for all, or at least as much as possible for most users of the entire audience even for users having moved from a first to a second screen of the plurality of screens.

At first, an aggregated content may be obtained by retrieving content assets from a plurality of content sources, such as content assets from content sources such as, but not limited to, news streams like CNN, weather-forecasts, financial information sources, content assets from certain social networks such as Twitter, Facebook, Yammer, Instagram, specific web sites (RSS), multimedia content, corporate apps etc.

From the aggregated content obtained, a set of content assets for each display is composed based on the users of the audience of the respective display device. For each display device of the plurality of display devices, it is determined based on at least one characteristic of a user, which users are present in front of each display device of the plurality of the display devices. Furthermore, for each user in front of such display, an estimate is made of the content assets such user already has consumed in front of any display of the plurality of displays, so that content assets can be chosen in such manner that each user of the audience is shown a set content assets that is as much as possible relevant and/or attractive, and as much as much as possible, uncharted for all users of the entire audience even for users having moved from a first to a second display device of the plurality of display devices.

Uncharted content is content that the user hadn't seen on any previous occasion, i.e. something new to him in his location context.

Due to the fact that, based on the at least one obtained characteristic of the users, it can be determined which users are present in front of a display device, in other words which users are the members of the audience of a certain display device and at the same time it is known which content assets are rendered at such display device, an estimation can be made which content assets are consumed by whom of the users.

According to an embodiment of the present invention the Content management server further comprises a content forwarding means that is configured to distribute said set of content assets towards said display device of said plurality of display devices.

The content forwarding means distributes a set of content assets towards said display device of said plurality of display devices.

The set of content assets that is selected is based on the audience of a certain display device of the plurality of displaying devices is conveyed to the respective display device with the corresponding audience where the set of content assets is optimum tailored to the users of this audience.

During the installation phase, a Unique Identification Number (UID) is associated with each display device. This information is stored in a System database to allow to (further) addressing the devices.

According to still another embodiment of the present invention, the content management server comprises a consumed content estimation means that is configured to make an estimation of the content assets already being consumed by each user of said audience of said display device based on tracking for each display device of said plurality of display devices the content assets each user consumes or already has consumed.

In this manner, by tracking for each user of the audience which content assets are consumed at any earlier moment in time in front of any display of the plurality of displays, a list can be generated, which list may contain all content assets of the aggregated content, the meant user already has consumed at any of the display devices. As it is known, based on the at least one characteristic of each of the users obtained, which users are present in front of a display device, in other words which users are the members of the audience and at the same time it is known which content assets are rendered at such display device, an estimation can be made which content assets a user has consumed.

According to still another embodiment of the present invention, the Content management server further comprises a user interaction means that is configured to determine the users of said audience of each display device of said plurality of display devices by retrieving at least one characteristic of each user of said audience of said display device.

The presence of the users of the audience of each display device of said plurality of display devices is determined based on at least one characteristic retrieved of each user of said audience of said display device.

Such at least one characteristic of a user may include any biometric (visual) characteristics, electronic characteristics or software characteristics e.g. by means of, or via a dedicated application installed at user's smartphone or other device which characteristics may be determined by means of, but not limited to, Vision Systems, Machine Vision Systems and other image processing equipments as well as portable electronic devices scanning techniques (iBeacon, Bluetooth or any NFC or mobile based equipment) and GPS technologies could be used.

Additionally, depending on the accuracy of the technology and potentially subject to privacy concerns, various type of temporal and spatial information - user id, presence information, time spent in front of the screen, the point of gaze (where one is looking), etc - could be determined at the display device and be forwarded to the user interactions means on a regular basis, or at explicit request.

According to still another embodiment of the present invention, a Display device is configured to render a set of content assets at said display device where, said display device comprises a content reception means that is configured to receive a set of content assets from a content management server and a user interaction detection means that is configured to detect at least one characteristic of each user of said audience of said display device for forwarding to a Content management server.

The display device, by means of the content reception means that is configured to receive a set of content assets from an aggregated content source either being located at or being under control of a content management server for rendering this content assets received from such aggregated content source. The user interaction detection means is configured to detect at least one characteristic of each user of said audience of said display device for forwarding to a Content management server, where this at least one characteristic represents the identity of users of the audience of the display device with respect to the set of content assets being received at the display device and currently being rendered at this display device and the interaction with this set of content assets.

The at least one characteristic of the user identifies a user and the corresponding interaction of this user with the rendered set of content assets. where such interaction could include the duration of time a user is present before a display device, the content asset he is looking at, as possibly may be determined based on eye gaze tracking.

The effects and advantages of the apparatus and systems according to embodiments of the present invention are substantially the same, *mutatis mutandis,* as those of the corresponding methods according to embodiments of the present inventions.

It is to be noticed that the term 'comprising', used in the claims, should not be interpreted as being restricted to the means listed thereafter. Thus, the scope of the expression 'a device comprising means A and B' should not be limited to devices consisting only of components A and B. It means that with respect to the present invention, the only relevant components of the device are A and B.

Similarly, it is to be noticed that the term 'coupled', also used in the claims, should not be interpreted as being restricted to direct connections only. Thus, the scope of the expression 'a device A coupled to a device B' should not be limited to devices or systems wherein an output of device A is directly connected to an input of device B. This means that there exists a path between an output of A and an input of B which may be a path including other devices or means.

### BRIEF DESCRIPTION OF THE DRAWINGS

The above and other objects and features of the invention will become more apparent and the invention itself will be best understood by referring to the following description of an embodiment taken in conjunction with the accompanying drawings wherein:
Fig. 1 represents a functional representation of a system for rendering a set of content assets distributed by a content management server at a display device of a plurality of display devices of said system according to an embodiment of the present invention; and
Fig. 2 represents the functional structure of a content management server CMS and a display device DD1 according to an embodiment of the present invention.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

### DESCRIPTION OF EMBODIMENTS

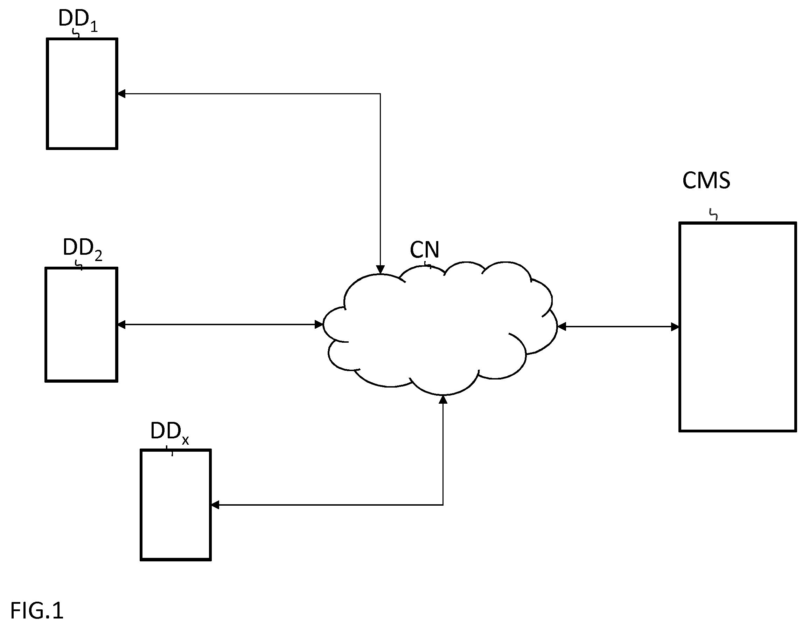

In the following paragraphs, referring to the drawing in FIG.1, an implementation of a method by means of a content management server CMS and related display devices DD₁...DDₓ, for rendering a set of content assets at a display device of a plurality of display devices DD₁...DDₓ according to an embodiment of the present invention is described.

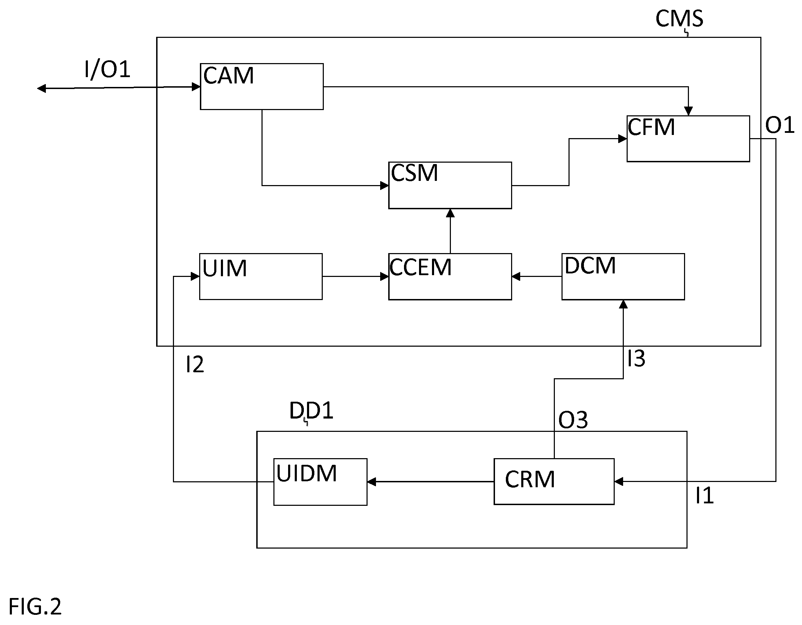

In a further paragraph, all connections between mentioned elements are defined. Subsequently all relevant functional means of the mentioned content management server CMS and the relevant functional means of the display device DD₁ as presented in FIG.2 are described followed by a description of all interconnections.

In the succeeding paragraph the actual execution of the method is described.

A first essential element of the system of the present invention is a content management server CMS.

The content management server CMS, is configured to distribute a set of content assets to each display device of a plurality of display devices DD₁...DDₓ, where each display device having an audience comprising at least one user for consuming a set of content assets rendered at said display device.

Additionally there is a plurality of display devices for rendering such distributed sets of content assets to the audience of each respective display device.

The content management server CMS first is coupled to a plurality of content sources over a communications network, where such communications network may include an xDSL, xPON, WMAN, LAN, 3G link or other fixed or mobile connection such as Wi-Fi, Bluetooth, GSM, UMTS 4G etc or any combination of the previous communication networks.

Additionally, each display device of said plurality of display devices DD₁...DDₓ is coupled to the Content management server CMS over another communications network, where such communications network likewise may include an xDSL, xPON, WMAN, LAN, 3G link or other fixed or mobile connection such as Wi-Fi, Bluetooth, GSM, UMTS 4G etc or any combination of the previous communication networks.

The content management server CMS may comprise or be associated to a content aggregation means CAM that is configured to obtain an aggregated content C₀..Cₓ by retrieving content assets from a plurality of content sources content coupled to said content management server CMS. The content management server CMS further comprises a content selection means CSM, that is configured to select for a respective display device of said plurality of display devices, a corresponding set of content assets (for rendering at said respective display device from said aggregated content C₀..Cₓ, based on an estimation of the content assets already consumed by each user of said audience of said display device.

Moreover, the content management server CMS further may comprise a content forwarding means CFM that is configured to distribute said corresponding set of content assets towards said respective display device D₁ of said plurality of display devices DD₁...DDₓ and a consumed content estimation means CCEM that is configured to make an estimation of the content assets already consumed by each user of said audience of said display device DD1 based on tracking for each display device of said plurality of display devices D₁...Dₓ, the content assets each user consumes.

The Content management server CMS, further comprises a user interaction means UIM, that is configured to determine said users of said audience of each display device of said plurality of display devices D₁...Dₓ by obtaining at least one characteristic of each user of said audience of said display device. The content management server CMS additionally comprises a displayed content manager DCM that is configured to track based on a signal of the display device DD₁ which set of contents is rendered and when.

The content aggregation means CAM of the content management server CMS is coupled with a first output-terminal to an input of the content forwarding means CFM, and is coupled with a second output-terminal to an input of the content selection means CSM. The content selection means CSM further is coupled with an output-terminal to a further input-terminal of the content forwarding means CFM.

The content management server CMS further comprises a user interaction means UIM that has an input-terminal that is at the same time an input-terminal of the content management server CMS and is further coupled with an output-terminal to an input-terminal of the consumed content estimation means CCEM. The consumed content estimation means CCEM further has an input-terminal that is coupled to an output-terminal of the displayed content manager DCM. The displayed content manager DCM has an input-terminal that is at the same time an input-terminal I3 of the content management server CMS. Finally, the content prediction means CCPM further has an output-terminal that is coupled to an input-terminal of the content selection means CSM.

The respective Display device DD₁ is configured to render a set of content assets, received from the content management server CMS where the display device comprises a content reception means CRM that is configured to receive a set of content assets from a content management server CMS and a user interaction detection means UIDM that is configured to detect at least one characteristic of each user of said audience of said display device DD₁ for forwarding to a Content management server CMS.

The content reception means CRM of the Display device DD₁ is coupled with an output-terminal to an input of the user interaction detection means UIDM that in turn has an output-terminal that is at the same time an output-terminal O₂ of the display device DD₁. The content reception means CRM has an input-terminal that is at the same time an input-terminal I₁ of the display device DD₁ and an output-terminal that is at the same time an output-terminal O₃ of the display device DD₁

For sake of simplicity, only the functional structure of display device DD₁ is described although each of the display devices DD1,.., DDx has the same functional structure as display device DD₁.

In order to explain the present invention first it is assumed that within an enterprise, such enterprise leverages digital signage solutions to compliment other enterprise-wide communication channels, directing employees and targeted audiences to detailed information, programming, or events via its web sites or Business TV.

Networks of display devices DD1,.., DDx are installed at different venues such as coffee machine areas, corridors, meeting rooms or restaurants. A same screen can display multiple content assets at the same time.

Further, it is assumed that in front of a respective display device DD1 there is an audience comprising at least one user for consuming the set of content assets being rendered at said display device, meaning that there may be a group of people present in front of this display who may be watching, or not, these multiple contents, i.e. a corresponding set of content assets, being presented at the display device DD1. Furthermore, it is assumed that there is a group of people present in front of the further display devices, i.e. display device DD2,..,DDₓ who possibly are watching multiple content assets, i.e. a set of content assets, being presented at each respective display device DD2,..,DDₓ. The set of content assets being rendered at each display device of the plurality display devices display device DD1,.., DDx, may be the same content for each display device. The content assets for rendering at each display device of the plurality display devices display device DD1,..,DDₓ, may be collected by a content aggregation means CAM that either may be incorporated in the content management server CMS or may be associated with the content management server CMS over a communications network, which content aggregation means CAM is configured to obtain an aggregated content C₀..Cₓ by retrieving content assets from a plurality of content sources content which are coupled to said content management server CMS. Such content sources may include content sources such as, but not limited to, news streams like CNN, weather-forecasts, financial information sources, content assets from certain social networks such as Twitter, Facebook, Yammer, Instagram, specific web sites (RSS), multimedia content, corporate apps etc. The content aggregation means CAM aggregates and stores each of the content assets at a content repository (not shown). The content management server CMS further comprises a content forwarding means CFM that is configured to distribute a set of content assets towards each display device of the plurality of display devices DD₁...DDₓ.

However, such digital signage systems still experience several limitations, such as that a same user may see several times the same content, or that the observation of screens deployed at multiple locations do not provide complementary content. Furthermore, contents e.g. may be adapted to the audience, but a same audience may generate a same content subsequently.

In order to overcome this problem, the content management server CMS according to the present invention additionally comprises a content selection means CSM that is configured to select for a respective display device of said plurality of display devices, a set of content assets for rendering on said respective display device obtainable from said aggregated content C₀..Cₓ, based on an estimation of the content assets already consumed by each user of said audience of said respective display device so that the impact of the selected set of content assets is maximized, at rendering this set of content assets at the respective display device DD1, by optimizing the capturing of the attention of people in front of the digital signage, while the set of content assets must be relevant, attractive, and as much as much as possible, uncharted for all, or at least as much as possible for most users of the audience.

The content selection means CSM, hence is configured to select for a display device of said plurality of display devices, a set of content assets for rendering on said display device obtainable from said aggregated content C₀..Cₓ, based on an estimation of the content assets already consumed by each user of said audience of said display device.

At first, the content forwarding means CFM distributes a set of content assets selected for a certain display device DD₁ towards the display device DD₁. The distributed set of content assets is received by the content reception means CRM of the display device DD₁ and subsequently rendered at the screen of this display device DD₁.

The user interaction detection means UIDM at display device DD₁ detects for each of the users of the audience of the display characteristics such as the identity of a person, the time spent in front of the screen, or the content he is looking for. This information may be detected by means of 1) scanning techniques (iBeacon, Bluetooth or any NFC or mobile based equipment) and GPS technologies could be used being incorporated in each of the user's Smartphone, 2) alternatively based on Vision Systems, Machine Vision Systems and other image processing equipments or 3) by means of eye gaze tracking solutions.

Depending on the accuracy of the technology and privacy concerns, various type of temporal and spatial information - user identification, presence information, and time spent in front of the screen, the point of gaze (where one is looking), etc are collected.

Such, determined characteristics on each of these users of the audience of each display detected by means of the user interaction detection means UIDM are forwarded on a regular basis and/or at request, towards the user interaction means UIM of the content management server CMS. The user interaction means UIM then based on the forwarded characteristics of each of the users of a display device DD1 determines the identity of each of the users of said audience of display device DD₁.

In addition the content management server CMS comprises means to keep track of the set of contents assets factually rendered at a certain display device DD₁ of the plurality of display devices DD₁...DDₓ, and when such set of content assets factually was rendered at the respective display device DD₁. This could be performed by means of a displayed content manager DCM that tracks based on a signal of the display device DD₁ which set of contents is rendered and when. Alternative, the content forwarding means CFM could keep track of each set of content assets forwarded to display device DD₁ and this was forwarded towards the display device DD₁.

Based on at least the input regarding the tracking of the set of content assets rendered at the display device DD₁ together with the timing on the rendering of each set of content assets in combination with the output of the of the user interaction means UIM of the content management server CMS, the consumed content prediction means CCPM which in turn makes an estimation of the content assets already consumed by each user of said audience of said display device based on tracking for each display device of said plurality of display devices D₁...,Dₓ, the content assets each user consumes.

An output of the consumed content estimation means CCEM, being the estimation of the content assets already consumed by each user of said audience of the display device DD₁ is applied for optimum selecting a set of content assets from said aggregated content C₀..Cₓ that is obtained by retrieving content assets from a plurality of content sources content CS₀,..,CSₓ coupled to said content management server CMS.

By first selecting a set of content assets from the aggregated content, which most or preferably all users of the audience of display device DD₁ have not yet consumed, for rendering this selection, at rendering, has the highest impact while the selected and rendered set of content assets must be relevant, attractive, and as much as much as possible, uncharted for all, or at least as much as possible for most users of the audience.

In this context, the problem to be solved is that is to be able to choose some contents for being displayed on the different screens that meet the expectations of all people in front of these screens but in addition also avoid to display the same content to a user who stays in front of the network of screens or moves from one screen to another one.

Regarding the broadcast of this information on the different screens, a content-administrator may specify:
- The number of times a content can be displayed to a same user.
- The value of each content: a score may be assigned to each content according to its impact on users or the importance of the sources in the context of an enterprise market (information from corporate sources could be considered as critical and should be displayed anyway whatever the user interactions models). The displayed content module DCM may consider this score to prioritize the contents to be displayed.

A final remark is that embodiments of the present invention are described above in terms of functional blocks. From the functional description of these blocks, given above, it will be apparent for a person skilled in the art of designing electronic devices how embodiments of these blocks can be manufactured with well-known electronic components. A detailed architecture of the contents of the functional blocks hence is not given.

While the principles of the invention have been described above in connection with specific apparatus, it is to be clearly understood that this description is merely made by way of example and not as a limitation on the scope of the invention, as defined in the appended claims.

## Claims

1. Method for rendering a set of content assets at a display device (DD₁) of a plurality of display devices (DD₁...DDₓ), each display device of said plurality of display devices (DD₁...DDₓ) being coupled to a content management server (CMS), said content management server (CMS) being configured to distribute content assets to each display device of said plurality of display devices (DD₁...DDₓ), each display device having an audience comprising at least one user for consuming said set of content assets rendered at said display device, wherein said method comprises the steps of:
- obtaining an aggregated content (C₀..Cₓ) by retrieving content assets from a plurality of content sources content (CS₀..CSₓ); and
- selecting for a display device of said plurality of display devices (DD₁...DDₓ), a set of content assets from said aggregated content (C₀..Cₓ), based on an estimation of content assets already consumed by each user of said audience of said display device.

2. Content management server (CMS), being configured to distribute a set of content assets to each display device of a plurality of display devices (D₁...Dₓ), each display device having an audience comprising at least one user for consuming said set of content assets rendered at said display device, wherein said Content management server (CMS) comprises:
- a content aggregation means (CAM), configured to obtain an aggregated content (C₀..Cₓ) by retrieving content assets from a plurality of content sources content (CS₀..CSₓ) coupled to said content management server (CMS); and
- a content selection means (CSM), configured to select for a display device of said plurality of display devices (DD₁...DDₓ), a set of content assets from said aggregated content (C₀..Cₓ), based on an estimation of the content assets already consumed by each user of said audience of said display device.

3. Content management server (CMS), according to claim 2, wherein said Content management server (CMS), further comprises:
- a content forwarding means (CFM), configured to distribute said set of content assets towards said display device (DD₁) of said plurality of display devices (DD₁...DDₓ).

4. Content management server (CMS), according to claim 2, wherein said Content management server (CMS), further comprises:
- a consumed content estimation means (CCEM), configured to make an estimation of the content assets already consumed by each user of said audience of said display device based on tracking for each display device of said plurality of display devices (DD₁...DDₓ) the content assets being rendered at each said display device and the identity of each user of said audience of said display device.

5. Content management server (CMS), according to any of claim 2 to 4, wherein said Content management server (CMS), further comprises:
- a user interaction means (UIM), configured to determine said users of said audience of each display device of said plurality of display devices (DD₁...DDₓ) by obtaining at least one characteristic of each user of said audience of said display device.

6. Display device (DD₁) configured to render a set of content assets at said display device (DD₁), said display device comprising:
- a content reception means (CRM) configured to receive a set of content assets from a content management server (CMS) according to any of claims 2 to 5; and
- a user interaction detection means (UIDM), configured to detect at least one characteristic of each user of said audience of said display device (DD₁) for forwarding to said Content management server (CMS).
